(19) **Europäisches Patentamt** / **European Patent Office** / **Office européen des brevets**

(11) **EP 4 675 500 A1**

(12) **EUROPEAN PATENT APPLICATION**
published in accordance with Art. 153(4) EPC

(43) Date of publication:
07.01.2026 Bulletin 2026/02

(21) Application number: 24774260.4

(22) Date of filing: 22.03.2024

(51) International Patent Classification (IPC):
G06N 3/0464 (2023.01)    G06N 3/08 (2023.01)

(86) International application number:
PCT/CN2024/083321

(87) International publication number:
WO 2024/193697 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.03.2023 CN 202310332748

(71) Applicant: HUAWEI TECHNOLOGIES CO., LTD.
Shenzhen, Guangdong 518129 (CN)

(72) Inventors:
• SHAO, Bin
  Shenzhen, Guangdong 518129 (CN)
• PEI, Renjing
  Shenzhen, Guangdong 518129 (CN)
• LI, Weimian
  Shenzhen, Guangdong 518129 (CN)
• XU, Songcen
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **NEURAL NETWORK MODEL PROCESSING METHOD, ELECTRONIC DEVICE AND READABLE STORAGE MEDIUM**

(57) This application relates to the field of artificial intelligence technologies, and discloses a neural network model processing method, an electronic device, and a readable storage medium. The method includes: A first electronic device obtains a to-be-processed first neural network model, where the first neural network model includes M first processing units, the M first processing units are capable of performing parallel processing on data, and M is greater than or equal to 2; the first electronic device combines the M first processing units of the first neural network into S second processing units, to obtain a second neural network, where S is less than M; and the first electronic device sends the second neural network model to a second electronic device. Multi-branch processing units in a trained first neural network model are adjusted and combined into a single-branch processing unit, to ensure precision of the deployed second neural network model. In addition, the second neural network model having the single-branch processing unit has a low requirement on hardware of a terminal device, and runs at a high speed after being deployed on the terminal device.

| | |
|---|---|
| A server 3 obtains input data | S701 |
| The server 3 configures, for a neural network model, multi-branch convolution units and multi-branch normalization units that correspond to a first preset quantity | S702 |
| The server 3 configures, for the neural network model, multi-branch distillation loss units corresponding to a second preset quantity | S703 |
| The server 3 trains the neural network model by using the input data | S704 |
| The server 3 adjusts the distillation loss units, the convolution units, and the normalization units of a trained neural network model to a single-branch target convolution unit and a single-branch target distillation loss unit, to obtain a target neural network model | S705 |
| The server 3 re-parameterizes parameters of the multi-branch convolution units and the multi-branch normalization units that correspond to the first preset quantity into a first fusion parameter | S706 |
| The server 3 re-parameterizes parameters of the multi-branch distillation loss units corresponding to the second preset quantity into a second fusion parameter | S707 |
| The server 3 configures the target convolution unit and the target distillation loss unit of the target neural network model by using the first fusion parameter and the second fusion parameter | S708 |
| The server 3 sends an adjusted target neural network model to an electronic device 2 | S709 |

FIG. 7

## Description

This application claims priority to Chinese Patent Application No. 202310332748.0, filed with the China National Intellectual Property Administration on March 23, 2023 and entitled "NEURAL NETWORK MODEL PROCESSING METHOD, ELECTRONIC DEVICE, AND READABLE STORAGE MEDIUM", which is incorporated herein by reference in its entirety.

## TECHNICAL FIELD

This application relates to the field of artificial intelligence technologies, and in particular, to a neural network model processing method, an electronic device, and a readable storage medium.

## BACKGROUND

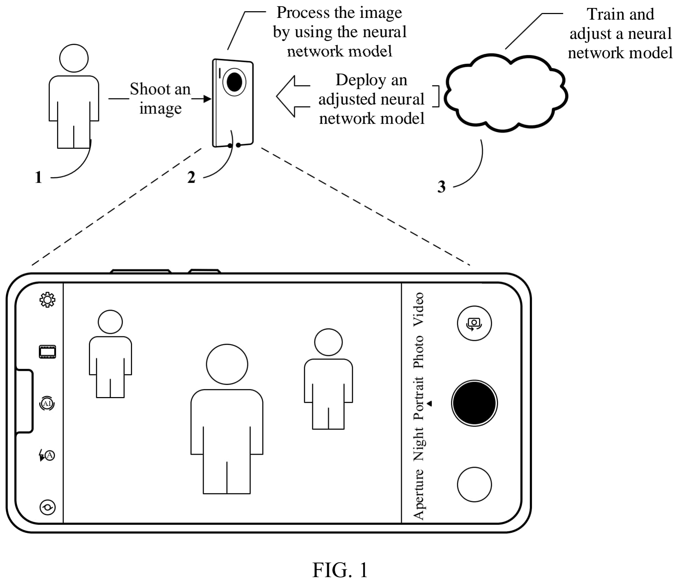

Currently, with development of an artificial intelligence (Artificial Intelligence, AI) technology in fields such as image processing and speech recognition, an increasing quantity of applications based on an artificial intelligence neural network model (which may also be referred to as an AI model) are deployed on terminal devices. As shown in FIG. 1, a server 3 may complete training of a neural network model, and deploy a trained neural network model on a terminal device 2. A user 1 may use an image shooting application of the terminal device 2 to shoot an image including a plurality of persons (that is, input data is an image), obtain a target person from the shot image through segmentation by using an image application based on the neural network model (AI-based pedestrian removal), and save the target person as another image.

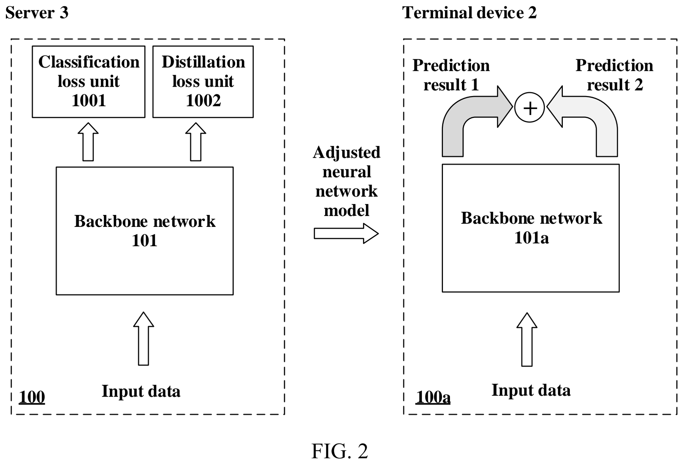

Hardware performance of the server is high. Generally, after training of the neural network model is completed on the server, the neural network model is deployed on an electronic device on a terminal side. As shown in FIG. 2, the server 3 deploys a trained neural network model 100 on the terminal device 2 to obtain a neural network model 100a including a classification loss unit 1001 and a distillation loss unit 1002. It can be learned that the server 3 does not adjust the neural network model 100a, and structures of the two neural network models are approximately the same. Because hardware performance of the terminal device 2 is weaker than that of the server 3, a running speed of the neural network model 100a on the terminal device 2 becomes slower. If the neural network model 100a needs to be adjusted, for example, processing units in the neural network model 100a are reduced, precision of the neural network model 100a is reduced.

## SUMMARY

To resolve the foregoing defect, this application provides a neural network model processing method, an electronic device, and a readable storage medium.

According to a first aspect, this application provides a neural network model processing method, including:

> A first electronic device obtains a to-be-processed first neural network model, where the first neural network model includes M first processing units, the M first processing units are capable of performing parallel processing on data, and M is greater than or equal to 2;
> the first electronic device combines the M first processing units of the first neural network into S second processing units, to obtain a second neural network, where S is less than M; and
> the first electronic device sends the second neural network model to a second electronic device.

In this application, the first electronic device herein may be a server, and the second electronic device herein may be a terminal device. The first neural network herein may be a neural network model that is trained on the server. The M first processing units of the first neural network may include N distillation loss units, K groups of convolution units, normalization units, T groups of convolution units, and a plurality of normalization units. Herein, the K groups of convolution units may be 3x3 convolution kernels, and the T groups of convolution units may be 1x1 convolution kernels. The S second processing units of the second neural network model may include at least one distillation loss unit, at least one group of convolution units (3x3 convolution kernels), and a normalization unit. Each of the M first processing units is configured with a first parameter, and each of the S second processing units is configured with a second parameter. The first electronic device may adjust the first parameter to the second parameter based on quantity of first processing units and a quantity of second processing units. When P=M, M first parameters of all the first processing units may be adjusted to S second parameters. When P<M, P first parameters of some first processing units may be adjusted to S second parameters.

It can be learned that, before the first neural network model is deployed on a terminal device, multi-branch processing units in the trained first neural network model may be adjusted and combined into a single-branch processing unit. Fusion calculation may be further performed on a plurality of first parameters corresponding to the multi-branch processing units, for example, summing, averaging, weighted averaging may be performed on the plurality of parameters, to determine one second parameter (fusion parameter). The single-branch processing unit obtained through combination is configured by using the fusion parameter. It can be learned that the processing unit that is obtained through combination and that is configured with the fusion parameter can cover processing capabilities of the plurality of processing units before the combining. This ensures precision of the deployed second neural network model. Compared with the first neural network model with the multi-branch processing units, the second neural network model with the single-branch processing unit has a lower requirement on hardware of the terminal device, and runs at a higher speed after being deployed on the terminal device.

In a possible implementation of the first aspect, that the first electronic device combines the M first processing units of the first neural network into the S second processing units, to obtain the second neural network includes:

obtaining first parameters of P first processing units in the M first processing units, where P is less than or equal to M; and

combining the first parameters of the P first processing units into a second parameter, and configuring the S second processing units by using the second parameter, where a value of S is 1.

In a possible implementation of the first aspect, the combination includes at least one of performing summation, averaging, or weighted averaging on the first parameters.

In a possible implementation of the first aspect, the P first processing units include P data processing units, and the P data processing units are configured to perform feature processing on data to obtain a prediction result.

The P first processing units include P distillation loss units, and the loss unit is configured to determine a difference between a prediction result output by a data processing units of the first neural network model and an actual result.

In this application, a process of combining the first parameters of the P data processing units into the S second parameters may include: determining, by using the following formula, the first parameters corresponding to the P data processing units included in the first neural network model:

$$\text{Conv}(x) = W_K(x) + b_K$$

Herein, $W_K$ indicates a weight of the data processing unit, $b_K$ indicates an offset of the data processing unit, and x indicates data input to the data processing unit.

x=is $\text{Conv}(x) = W_K(x) + b_K$ is substituted into the following formula:

$$\text{BN}(x) = \gamma(x - u)/\sigma + \beta$$

Herein, $\gamma$ indicates precision, u indicates a mean deviation, $\sigma$ indicates a variance, and $\beta$ indicates an offset.

The following is obtained:

$$\text{BN}(\text{Conv}(x)) = \gamma * W_K(x)/\sigma + \gamma(b_K - u)/\sigma + \beta$$

Herein, $W^a = \gamma * W_K/\sigma$ indicates a weight of the data processing unit obtained through combination, and $\gamma(b_K - u)/\sigma + \beta$ indicates an offset of the data processing unit obtained through combination.

In this application, the method further includes:
determining, by using the following formula, the second parameters corresponding to the S data processing units included in the second neural network model:

$$\widetilde{W^a} = \sum_i^K W^a, \quad \widetilde{b^a} = \sum_i^K b^a$$

Herein, $\widetilde{W^a}$ indicates a weight of the data processing unit, and $\widetilde{b^a}$ indicates an offset of the data processing unit.

In this application, a process of combining the first parameters of the P distillation loss units into the S second parameters may include:
determining, by using the following formula, the first parameters corresponding to the P distillation loss units included in the first neural network model:

$$O(x) = W_N(x) + b_N$$

Herein, $W_N$ indicates a weight of the distillation loss unit, $b_N$ indicates an offset of the distillation loss unit, and x indicates data input to the distillation loss unit.

In this application, the method further includes: determining, by using the following formula, the second parameters of the S distillation loss units included in the second neural network model:

$$\widetilde{W^b} = \sum_i^N W^b/N, \quad \widetilde{b^b} = \sum_i^N b^b/N$$

Herein, $\widetilde{W^b}$ indicates a weight of the distillation loss unit, and $\widetilde{b^b}$ indicates an offset of the distillation loss unit.

In this application, a quantity of data processing units may be the same as or may be different from a quantity of distillation loss units herein.

In a possible implementation of the first aspect, the first neural network model includes a convolutional neural network model, and a data processing unit includes a convolution layer or a pooling layer.

In a possible implementation of the first aspect, the first electronic device includes a server, and the second electronic device includes a terminal device.

In a possible implementation of the first aspect, the terminal device includes at least one of the following: a mobile phone, a tablet computer, and a smartwatch.

In a possible implementation of the first aspect, the first neural network model or the second neural network model is configured to implement at least one of the following functions: image recognition, text recognition, and speech recognition.

According to a second aspect, this application provides an electronic device for processing a neural network, including: a memory, configured to store instructions executed by one or more processors of the electronic device; and a processor, one of the processors of the electronic device, configured to perform the neural network model processing method according to the first aspect.

According to a third aspect, this application provides a computer-readable storage medium. The storage medium stores instructions, and when the instructions are executed on a computer, the computer is enabled to perform the neural network model processing method according to the first aspect.

According to a fourth aspect, this application provides a computer program product, including a non-volatile computer-readable storage medium. The non-volatile computer-readable storage medium includes a computer program/instructions used to perform the neural network model processing method according to the first aspect.

## BRIEF DESCRIPTION OF DRAWINGS

FIG. 1 is a diagram of an application scenario of using a neural network model by an application according to an embodiment of this application;

FIG. 2 is a diagram of deploying a neural network model on a terminal device according to an embodiment of this application;

FIG. 3 is a diagram of deploying a trained neural network model on a terminal device according to an embodiment of this application;

FIG. 4 is a diagram of adjusting and combining multi-branch processing units of a neural network model into a single-branch processing unit according to an embodiment of this application;

FIG. 5 is a diagram of an architecture of a server for training a neural network model according to an embodiment of this application;

FIG. 6 is a diagram of an architecture of a terminal device for deploying a neural network model according to an embodiment of this application;

FIG. 7 is a schematic flowchart of a neural network model processing method according to an embodiment of this application;

FIG. 8 is a diagram of a multi-branch structure formed by a convolution unit and a normalization unit at a data processing layer of a neural network model according to an embodiment of this application;

FIG. 9 is a diagram of a multi-branch structure formed by distillation loss units at a loss layer of a neural network model according to an embodiment of this application;

FIG. 10 is a diagram of a scenario in which a user shoots a character image by using a terminal device according to an embodiment of this application;

FIG. 11 is a diagram of a data processing layer in a neural network model according to an embodiment of this application;

FIG. 12 is a diagram of a data processing layer in a neural network model according to an embodiment of this application; and

FIG. 13 is a diagram of processing data by a convolution unit and an attention unit according to an embodiment of this application.

## DESCRIPTION OF EMBODIMENTS

To make the objectives, embodiments, and advantages of this application clearer, the following further describes the implementations of this application in detail with reference to the accompanying drawings.

To resolve a problem that precision of a neural network model deployed on a terminal device is reduced after processing units in a neural network model that is trained on a server are reduced. An embodiment of this application provides a neural network model processing method. In a model training process, multi-branch processing units are configured for a neural network model on a server. The neural network model is trained by using input data (training data), and a parameter of each processing unit in the neural network model is determined. The parameter may represent a processing capability of the processing unit. Before the neural network model is deployed on a terminal device, the multi-branch processing units in the trained neural network model may be adjusted and combined into a single-branch processing unit. In some embodiments, fusion calculation may be further performed on a plurality of parameters corresponding to the multi-branch processing units, for example, summing, averaging, weighted averaging may be performed on the plurality of parameters, to determine one fusion parameter. The single-branch processing unit obtained through combination is configured by using the fusion parameter. It can be learned that the processing unit that is obtained through combination and that is configured with the fusion parameter can cover processing capabilities of the plurality of processing units before the combining. This ensures precision of the deployed neural network model. In comparison with the multi-branch processing units, the neural network model with the single-branch processing unit has a lower requirement on hardware of the terminal device, and runs at a higher speed after being deployed on the terminal device.

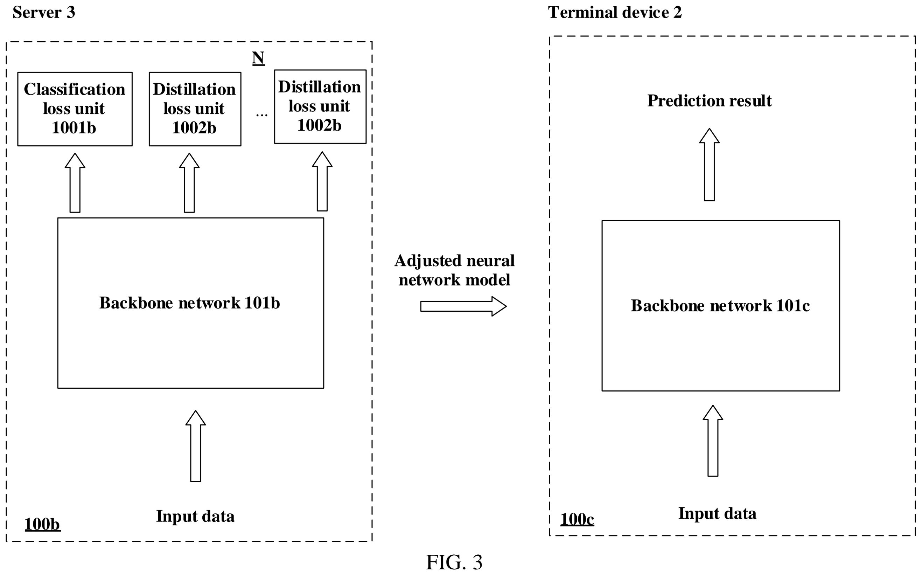

In some embodiments, FIG. 3 is a diagram of a neural network model 100c obtained by deploying a trained neural network model 100b on a terminal device 2 according to an embodiment of this application. In the embodiment shown in FIG. 3, the neural network model 100b may include one classification loss 1001b and N distillation loss units 1002b. Herein, N may be a natural number greater than 1. For example, a value of N may be 4.

A backbone network 101b is used to perform feature extraction on input data. For example, for image data, the backbone network 101b may convert the image data into an eigenvector as a prediction result. The eigenvector represents various information included in the image data, for example, a person, a vehicle, and an animal. The backbone network may also be referred to as an encoder network.

The classification loss unit 1001b is configured to evaluate performance of the neural network model 100b in performing a classification task on the input data. A classification loss may be calculated by comparing a difference between the prediction result of the neural network model and an actual result. The classification loss may be implemented by using a classification loss function, including a cross entropy loss function, a square loss function, and the like. For example, a number recognition application configured with the neural network model needs to classify handwritten numbers. An output of the neural network model is a vector including 10 elements, and each element represents a probability distribution of numbers 0 to 9. For example, if a handwritten number is a number 2, an actual result corresponding to the handwritten number is [0, 0, 1, 0, 0, 0, 0, 0, 0, 0]. If a prediction result of the model is [0.05, 0.1, 0.9, 0.01, 0.02, 0.02, 0.01, 0.01, 0.01, 0.01], a difference between an actual result and the prediction result is a classification loss.

The distillation loss unit 1002b represents generalization performance of the neural network model 100b. The generalization performance herein represents an adaptability of the neural network model 100b to a new sample. That is, the neural network model 100b can also provide a correct prediction result for new data other than input data having a same rule. For example, a number recognition application configured with the neural network model still needs to classify handwritten numbers. An output of the neural network model is a vector including 10 elements, and each element represents a probability distribution of numbers 0 to 9. For example, if a handwritten number is a number 1, and an actual result corresponding to the handwritten number is [0, 0.7, 0, 0, 0, 0, 0, 0.2, 0, 0.1], it indicates that 0.7 may be the number 1, 0.2 may be a number 7, and 0.1 may be a number 9. If a prediction result of the model is [0.05, 0.9, 0.1, 0.01, 0.02, 0.02, 0.01, 0.01, 0.01, 0.01], a difference between an actual result and the prediction result is a distillation loss. It can be seen that, compared with that of the classification loss unit, a distribution of the actual result corresponding to the distillation loss unit is wider, and the generalization performance of the neural network model 100 can be changed by changing a quantity of distillation loss units in a loss layer 103.

Still refer to FIG. 3. Before the trained neural network model is deployed on the terminal device, the neural network model 100b may be adjusted to a neural network model 100c. The neural network model 100c may output a prediction result of a single-branch distillation loss unit (not shown). A parameter of the distillation loss unit is a fusion parameter corresponding to parameters of the N distillation loss units 1002b of the neural network model 100b.

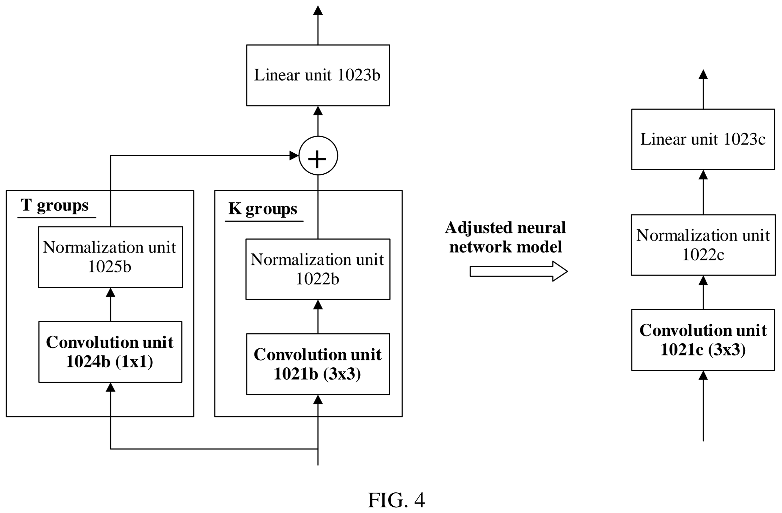

In some embodiments, FIG. 4 is a diagram of adjusting and combining multi-branch processing units into a single-branch processing unit. In the embodiment shown in FIG. 4, processing units of a neural network model in a model training process may include K groups of convolution units 1021b and a plurality of normalization units 1022b. Herein, K may be a natural number greater than 1. For example, a value of K may be 6.

The convolution unit 1021b is configured to extract a feature from input data to obtain feature data (an eigenvector). For example, when the convolution unit 1021b is a 3x3 convolution kernel, the convolution unit 1021b may extract a local feature of a 3x3 size from the input data.

The normalization unit 1022b may be referred to as a batch normalization (Batch Normalization, BN) unit, and is configured to reduce a data offset between units (nodes) in the neural network model, so that an output of the neural network model is more stable.

The neural network model may further include a single-branch linear unit 1023b, configured to perform dimension transformation on the feature data (eigenvector) as a prediction result. The linear unit 1023b may include a plurality of 1x1 convolution kernel subunits and an activation function subunit. The 1x1 convolution kernel subunit is configured to transform the feature data into a plurality of vectors, to reduce a dimension of the feature data. This improves processing efficiency. The activation function subunit, namely, a rectified linear unit (Rectified Linear Activation Function, ReLU), is configured to perform linear transformation on the feature data, for example, prune a negative part of the feature data to 0 and retain a positive part of the feature data.

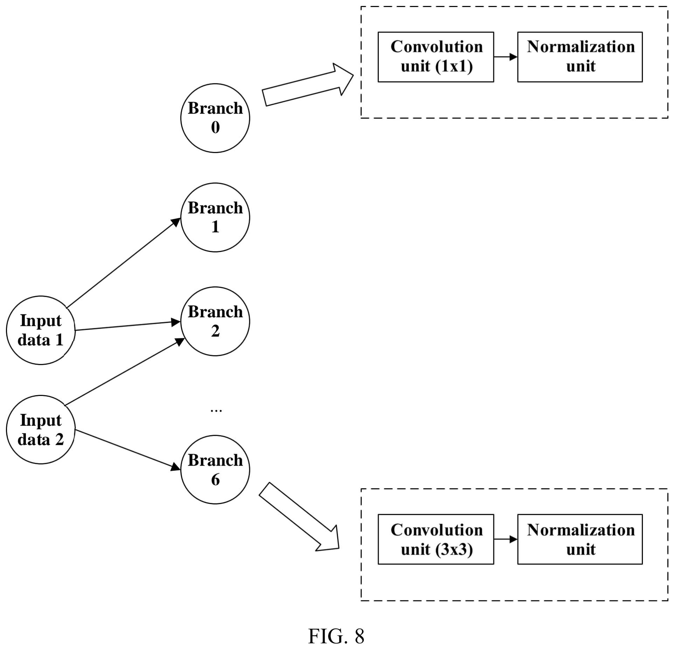

In some embodiments, T groups of convolution units 1024b and a plurality of normalization units 1025b are further added to a multi-branch structure formed by the K groups of convolution units 1021b and the plurality of normalization units 1022b. Herein, T may be a natural number greater than or equal to 1. For example, a value of T may be 1. The convolution unit 1024b herein may be a 1x1 convolution kernel, and is configured to transform the feature data into a plurality of vectors, to reduce a dimension of the feature data. This improves processing efficiency. Still refer to FIG. 4. Before the trained neural network model is deployed on the terminal device, the K groups of convolution units 1021b and the plurality of normalization units 1022b, and the T groups of convolution units 1024b and the plurality of normalization units 1025b may be adjusted and combined into a single-branch convolution unit 1021c and a single-branch normalization unit 1022c. A parameter of the convolution unit 1021c is a fusion parameter corresponding to parameters of the K groups of convolution units 1021b and the plurality of normalization units 1022b. A linear unit 1023c herein may be the same as the linear unit 1023b. A specific fusion calculation process of determining the fusion parameter is described in detail in an interaction procedure of the neural network model processing method shown in FIG. 8.

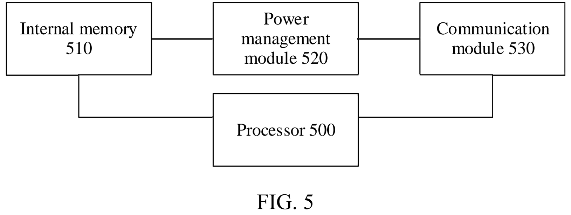

FIG. 5 is a diagram of an architecture of a server 3 for training a neural network model according to an embodiment of this application. The server 3 may include a processor 500, an internal memory 510, a power management module 520, and a communication module 530. The server 3 herein may include an application server, a cloud server, and the like.

The processor 500 may include one or more processing units. For example, the processor 500 may include a central processing unit (Central Processing Unit, CPU). The processor 500 is configured to: train a neural network model stored in the internal memory 510, and adjust the neural network model before deploying the neural network model on a terminal device. For example, multi-branch processing units in the trained neural network model may be adjusted and combined into a single-branch processing unit, to obtain a target neural network model.

The internal memory 50 may be configured to store computer-executable program code. The executable program code includes instructions. The internal memory 510 may include a program storage area and a data storage area. The program storage area may store the neural network model and training data.

The power management module 520 is configured to supply power to the processor 500 and the internal memory 510.

The communication module 530 is configured to: communicatively connect to at least one terminal device, and send an adjusted neural network model to the terminal device.

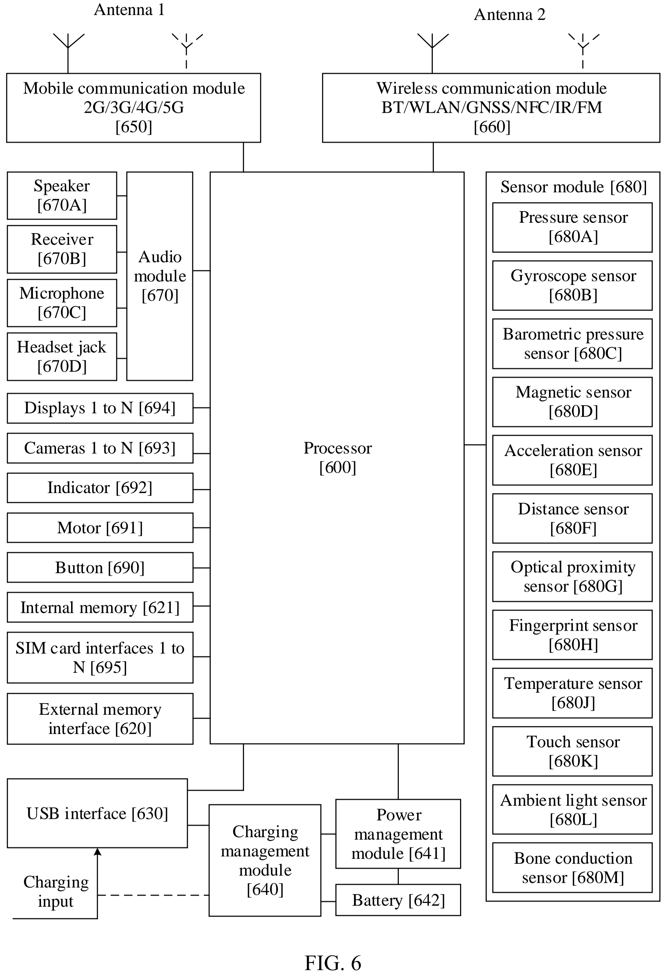

FIG. 6 is a diagram of an architecture of a terminal device 2 for deploying a neural network model according to an embodiment of this application. The terminal device 2 herein may include a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another device having a display. A specific type of the terminal device is not limited in embodiments of this application.

The terminal device 2 may include: a processor 600, an external memory interface 620, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a speaker 670A, a receiver 670B, a microphone 670C, a headset jack 670D, a sensor module 680, a button 690, a motor 691, an indicator 692, a camera 693, a display 694, a subscriber identity module (subscriber identify module, SIM) card interface 695, and the like. The sensor module 680 may include a pressure sensor 680A, a gyroscope sensor 680B, a barometric pressure sensor 680C, a magnetic sensor 680D, an acceleration sensor 680E, a distance sensor 680F, an optical proximity sensor 680G, a fingerprint sensor 680H, a temperature sensor 680J, a touch sensor 680K, an ambient light sensor 680L, a bone conduction sensor 680M, or the like.

It can be understood that, a structure illustrated in embodiments of this application does not constitute a specific limitation on the terminal device. In some other embodiments of this application, the terminal device may include more or fewer components than those shown in the figure, or some components may be combined, or some components may be split, or a different component arrangement may be used. The components shown in the figure may be implemented by using hardware, software, or a combination of software and hardware.

The processor 600 may include one or more processing units. For example, the processor 600 may include a central processing unit (Central Processing Unit, CPU), a microprocessor (Micro-programmed Control Unit, MCU), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU), or the like.

The processor may generate an operation control signal based on instruction operation code and a time series signal, to complete control of instruction fetching and instruction execution.

A memory may be disposed in the processor 600, and is configured to store instructions and data. In some embodiments, the memory in the processor 600 is a cache. The memory may store instructions or data just used or cyclically used by the processor 600.

A wireless communication function of the terminal device may be implemented by using the antenna 1, the antenna 2, the mobile communication module 650, the wireless communication module 660, the modem processor, the baseband processor, and the like.

The antenna 1 and the antenna 2 are configured to: send and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna in a wireless local area network. In other embodiments, the antenna may be used in combination with a tuning switch.

The mobile communication module 650 may provide a solution that is applied to the terminal device and that includes wireless communication such as 2G, 3G, 4G, 5G, and the like. In some embodiments, at least some function modules in the mobile communication module 650 and at least some modules in the processor 600 may be disposed in a same device.

In some embodiments, in the terminal device, the antenna 1 is coupled to the mobile communication module 650, and the antenna 2 is coupled to the wireless communication module 660, so that the terminal device can communicate with a network and another device by using a wireless communication technology.

The external memory interface 620 may be configured to connect to an external storage card such as a micro SD card, to extend a storage capability of the terminal device. The external storage card communicates with the processor 600 through the external memory interface 620, to implement a data storage function. For example, files such as music and a video are stored in the external storage card.

The internal memory 621 may be configured to store computer-executable program code. The executable program code includes instructions. The internal memory 621 may include a program storage area and a data storage area. The processor 600 runs the instructions stored in the internal memory 621 and/or the instructions stored in the memory disposed in the processor, to execute various function applications of the terminal device and process data. In some embodiments, the internal memory 621 may store a neural network model.

The SIM card interface 795 is configured to connect to a SIM card.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programming language or an object-oriented programming language to communicate with the processing system. The program code may also be implemented by using an assembly language or a machine language when required. Actually, the mechanism described in this specification is not limited to a scope of any particular programming language. In any case, the language may be a compiled language or an interpretive language.

One or more aspects of at least one embodiment may be implemented by using representative instructions stored in a computer-readable storage medium. The instructions represent various types of logic in a processor, and when the instructions are read by a machine, the machine is enabled to manufacture logic for performing the technical solutions described in this specification. These representations referred to as "IP cores" may be stored in a tangible computer-readable storage medium, and provided for a plurality of customers or production facilities for loading into a manufacturing machine that actually manufactures the logic or the processor.

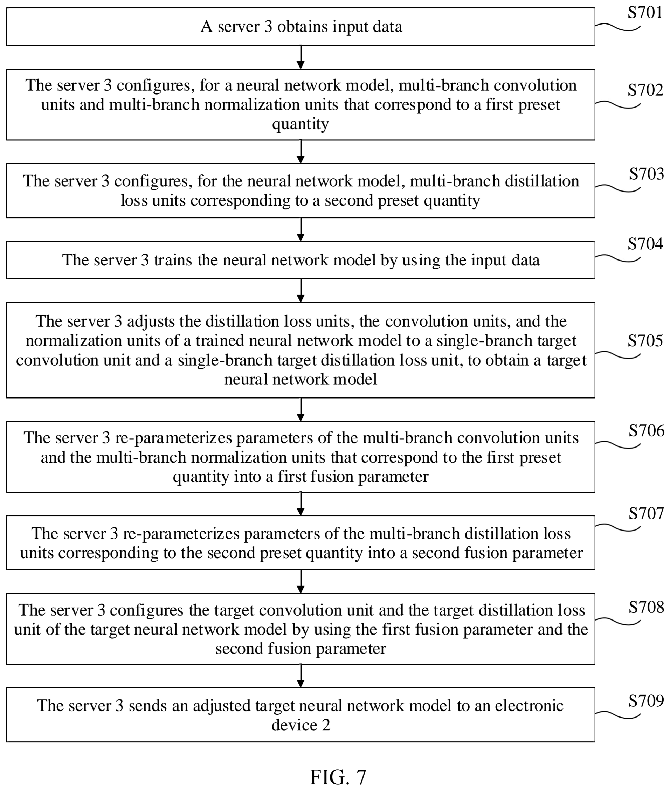

The following describes in detail, based on the diagram shown in FIG. 7, the processing method provided in this embodiment of this application. The method shown in FIG. 7 may be implemented by processors of the server 3 and the terminal device 2 by executing related instructions.

Refer to FIG. 7. The processing method may include the following steps.

S701: The server 3 obtains input data.

For example, the input data herein may be training data for training a neural network model. In some embodiments, assuming that the neural network model is a smart cursor image matting function used for an image application of the terminal device 2, the input data may be foreground image data and background image data in an image, of an unknown category, with a label, and is denoted as a dataset I. To prepare the dataset I, a set of samples including a foreground image and a background image may be prepared in advance and split into two parts, for example, a foreground dataset and a background dataset.

In some embodiments, the dataset I herein may be implemented processing an existing image (including an image in a common dataset or a dataset in a specific field) through manual splitting or by using a computer vision technology. The common dataset herein may be ImageNet1k, and the common dataset may include 1,000 categories, including a total of more than 1 million images and 50,000 test images. Once splitting is complete, a label needs to be assigned to each image to indicate whether the image is a foreground image or a background image. When the dataset I is prepared, the following factors are considered:

data amount: the dataset needs to contain sufficient samples, so that the neural network model can learn sufficient features to improve classification accuracy;

data quality: images in the dataset may be high-quality (high-resolution) images with good definition and contrast, so that the images can be accurately segmented into a foreground image and a background image; and

data diversity: the images in the dataset should cover different types of foregrounds and backgrounds, so that the neural network model can learn different types of samples, to improve generalization performance of the neural network model.

S702: The server 3 configures, for the neural network model, multi-branch convolution units and normalization units that correspond to a first preset quantity.

For example, the server 3 may configure the convolution units and the normalization units for a data processing layer of the neural network model based on the first preset quantity. The convolution unit herein may be configured to extract an image feature. The normalization unit herein may be a regularization technology, and may be configured to prevent overfitting of an output result of the convolution unit. An output result of each convolution unit may be standardized by configuring the normalization unit for the convolution unit. This accelerates training of the neural network model and improves generalization performance of the neural network.

In some embodiments, the first preset quantity herein may be represented by K, and K may be a natural number greater than 1. For example, K may be 6. In this case, six groups of convolution units and the normalization units may form a multi-branch architecture, that is, a plurality of parallel convolution units are added to the neural network model, so that different features can be extracted from the input data at the same time. It may be understood that 6 herein is an example, and another value may be alternatively used in embodiments of this application. This is not limited herein. As values of K are different, quantities of branches formed by the convolution units and the normalization units in the neural network model are also different.

Refer to FIG. 8 below. FIG. 8 shows a multi-branch structure formed by convolution units and normalization units at the data processing layer of the neural network model according to an embodiment of this application.

As shown in FIG. 8, when the value of K is 6, the neural network model may include six branches formed by convolution units and normalization units, namely, a branch 1 to a branch 6, for receiving input data 1 and input data 2. The convolution units and the normalization units in each branch may include respective parameters.

For example, a convolution unit may be indicated by using a formula (1): $Conv(x) = W_K(x) + b_K$, where x indicates input data, for example, an eigenvector, $W_K$ indicates a weight, and $b_K$ indicates an offset. The weight herein indicates a probability that the input data belongs to a category, and the offset is a constant used to adjust a value of $W_K(x)$, to prevent the value from being excessively large or excessively small, that is, exceeding a range of a normal value.

For example, a normalization unit may be indicated by using a formula (2): $BN(x) = \gamma_K(x - u_K)/\sigma_K + \beta_K$, where x indicates input data, $\gamma_K$ indicates precision, $u_K$ indicates a mean deviation, $\sigma_K$ indicates a variance, and $\beta_K$ indicates an offset. An output result of the convolution unit may be limited within a range by using the formula (2), for example, [0, 1], that is, from 0 to 1.

Still refer to FIG. 8. A convolution unit in the branch 1 to the branch 6 may be a 3x3 convolution kernel. In some embodiments, a parallel branch 0 may be further disposed for the branch 1 to the branch 6. The branch 0 may also include a convolution unit and a normalization unit. The convolution unit in the branch 0 may be a 1x1 convolution kernel. The 1x1 convolution kernel can work with the 3x3 convolution kernel to process the input data at the same time, to convert the input data into a plurality of vectors to reduce a dimension of the input data. This improves processing efficiency.

S703: The server 3 configures, for the neural network model, multi-branch distillation loss units corresponding to a second preset quantity.

For example, the server 3 may configure distillation loss units for a loss layer of the neural network model based on the second preset quantity.

In some embodiments, the second preset quantity herein may be indicated by N, and N may be a natural number greater than 1. For example, N may be 4. In this case, four groups of distillation loss units may form a multi-branch architecture. In other words, a plurality of parallel distillation loss units are added to the neural network model, so that a prediction result of the neural network model can be compared with an actual result, to obtain a difference. It may be understood that 4 herein is an example, and another value may be alternatively used in embodiments of this application. This is not limited herein. As values of N are different, quantities of branches formed by the distillation loss units in the neural network model are also different.

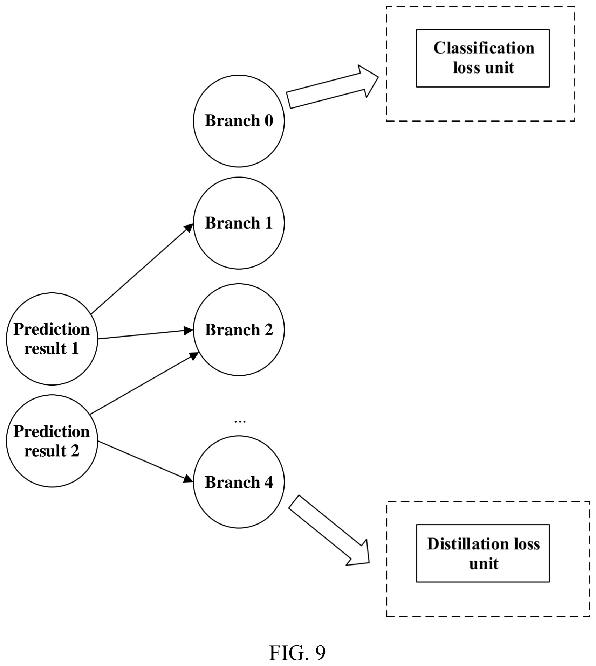

Refer to FIG. 9 below. FIG. 9 shows a multi-branch structure formed by distillation loss units at the loss layer of the neural network model according to an embodiment of this application.

As shown in FIG. 9, when the value of N is 4, the neural network model may include four branches formed by distillation loss units, namely, a branch 1 to a branch 4, for receiving a prediction result 1 and a prediction result 2 as input data. The distillation loss units in each branch may include respective parameters. For example, a distillation loss unit may be indicated by using a formula (1): $O(x) = W_N(x) + b_N$, where x indicates input data, for example, an eigenvector, $W_N$ indicates a weight, and is denoted as $W^b$, and $b_N$ indicates an offset, and is denoted as $b^b$.

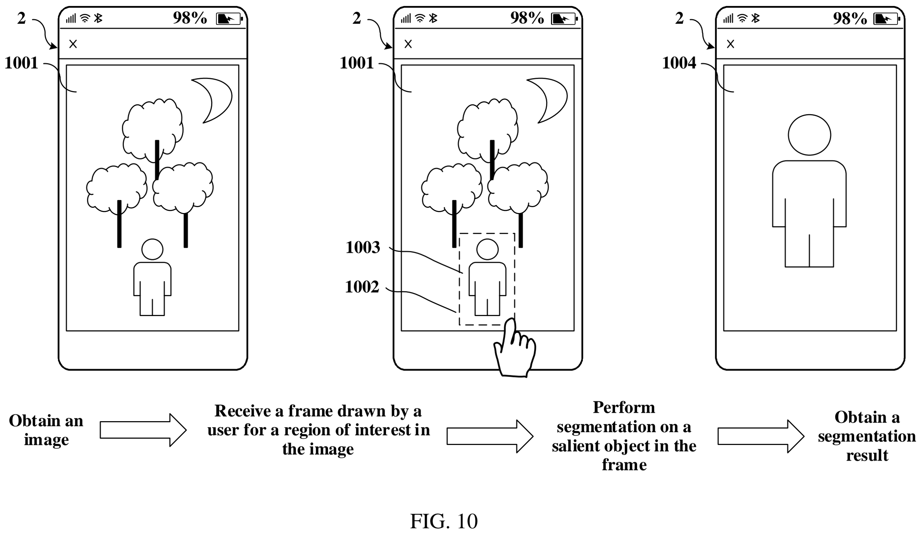

Still refer to FIG. 10. A parallel branch 0 may be further disposed for the branch 1 to the branch 4, and the branch 0 may be formed by one classification loss unit.

S704: The server 3 trains the neural network model by using the input data.

For example, after configuring the neural network model, the server 3 trains the neural network model by using the dataset I, compares an obtained output result with an actual result (a real result) corresponding to the label, calculates a loss (a difference), reversely updates a model parameter of the neural network model by using the obtained loss, and repeats this step until a preset quantity of training times is reached.

In some embodiments, in a training process, the dataset I including the foreground image data and the background image data is used as an example. The image data in the dataset I is used as an input to obtain an output result. A difference (loss) between each output result and the actual result corresponding to the label is calculated, and the model parameter of the neural network model is updated by using a back propagation algorithm, to minimize the loss. The server 3 may repeat this process until the preset quantity of training times is reached or a preset value of the loss is reached.

In some embodiments, after training a neural network model, the server 3 may store the neural network model for future use. The server 3 may store a structure and a model parameter of the neural network model to a file for reloading when the neural network model needs to be used. When storing the neural network model, the server 3 may further store some metadata (such as a network architecture and the model parameter) together.

S705: The server 3 adjusts the distillation loss units, the convolution units, and the normalization units of the trained neural network model to a single-branch target convolution unit and a single-branch target distillation loss unit, to obtain a target neural network model.

For example, the server 3 may adjust the multi-branch distillation loss units, the multi-branch convolution units, and the multi-branch normalization units in the trained neural network model to single branches. In other words, the single-branch target distillation loss unit is configured at the loss layer of the adjusted target neural network model, and the single-branch target convolution unit is configured at the data processing layer of the adjusted target neural network model.

S706: The server 3 re-parameterizes parameters of the multi-branch convolution units and the multi-branch normalization units that correspond to the first preset quantity into a first fusion parameter.

For example, a value of the first preset quantity K is 6. Re-parameterizing the parameters herein may be fusing parameters of the convolution units and the normalization units (including the convolution unit and the normalization unit in the branch 0) in the seven branches of the data processing layer of the neural network model into one parameter, namely, the first fusion parameter, and configuring the target convolution unit of the data processing layer of the target neural network model by using the first fusion parameter.

In some embodiments, the branch 1 shown in FIG. 8 is used as an example. A convolution unit is indicated by using $Conv(x) = W_K(x) + b_K$, and a normalization unit is indicated by using a formula $BN(x) = \gamma(x - u)/\sigma + \beta$. The convolution unit and the normalization unit in each branch are fused. Because the normalization unit is configured to process an output result of the convolution unit, $Conv(x) = W_K(x) + b_K$ is used as an input x and is substituted into the normalization unit to obtain $BN(Conv(x)) = \gamma(W_K(x) + b_K - u)/\sigma + \beta$, and a formula (3) $BN(Conv(x)) = \gamma * W_K(X)/\sigma + \gamma(b_K - u)/\sigma + \beta$ is obtained after

sorting. It can be learned that the formula (3) is equivalent to a formula of a convolution unit, where $\gamma * W_K/\sigma$ indicates a weight, and is denoted as $W^a$, and $\gamma(b_K - u)/\sigma + \beta$ indicates an offset, and is denoted as $b^a$.

In some embodiments, for the branch 0 in FIG. 9, the convolution unit and a normalization unit in the branch 0 also need to be fused. The 1x1 convolution kernel herein needs to be converted into a convolution kernel, and a 0 padding operation needs to be performed around the convolution kernel, so that the original 1x1 convolution kernel is in a center of a 3x3 convolution kernel. Parameters obtained after fusion of the convolution units and the normalization units in the seven branches are sequentially obtained, and the parameters are summed separately to obtain the first fusion parameter for configuring the target convolution unit. For example, the first fusion parameter may include $\widetilde{W^a}$ and $\widetilde{b^a}$, where $\widetilde{W^a} = \sum_i^K W^a$, and $\widetilde{b^a} = \sum_i^K b^a$. In other words, the parameters obtained after fusion of the multi-branch convolution units and the multi-branch normalized units are summed.

S707: The server 3 re-parameterizes parameters of the multi-branch distillation loss units corresponding to the second preset quantity into a second fusion parameter.

For example, a value of the second preset quantity N is 4. Re-parameterizing the parameters herein may be fusing parameters of the distillation loss units (excluding the classification loss unit in the branch 0) in the four branches of the loss layer of the neural network model into one parameter, namely, the second fusion parameter, and configuring the target distillation loss unit of the data processing layer of the target neural network model by using the first fusion parameter.

In some embodiments, the branch 1 shown in FIG. 9 is used as an example. The distillation loss unit is indicated by $O(x) = W_N(x) + b_N$. Parameters of the distillation loss units in the four branches are sequentially obtained, and the parameters are separately summed to obtain the second fusion parameter for configuring the target convolution unit. For example, the second fusion parameter may include $\widetilde{W^b}$ and $\widetilde{b^b}$, where $\widetilde{W^b} = \sum_i^N W^b/N$, and $\widetilde{b^b} = \sum_i^N b^b/N$, where i=1, 2, 3, ..., N. In other words, an average sum of the parameters obtained after fusion of the multi-branch convolution units and the multi-branch normalized units is calculated.

S708: The server 3 configures the target convolution unit and the target distillation loss unit of the target neural network model by using the first fusion parameter and the second fusion parameter.

For example, the target convolution unit of the target neural network model may be indicated by using a formula (4): $\mathrm{Conv}(x) = \widetilde{W^a}(x) + \widetilde{b^a}$, where $\widetilde{W^a}$ indicates a weight, and $\widetilde{b^a}$ indicates an offset. The target distillation loss unit of the target neural network model may be indicated by using a formula (5): $O(x) = \widetilde{W^b}(x) + \widetilde{b^b}$, where $\widetilde{W^b}$ indicates a weight, and $\widetilde{b^b}$ indicates an offset.

S709: The server 3 sends the adjusted target neural network model to the terminal device 2.

For example, the server 3 may send the adjusted target neural network model to the terminal device 2. For example, the target neural network model is used for a smart cursor image matting function of an image application of the terminal device 2. The terminal device 2 may configure the image application by using the target neural network model, to improve image matting efficiency of the image application.

In some embodiments, after the target neural network model is deployed on the terminal device 2, a user may use an application based on the target neural network model. FIG. 10 shows a scenario in which a user uses a terminal device to shoot a character image, selects a character in the image, and uses an image application of the terminal device to perform image matting on the character according to an embodiment of this application.

As shown in FIG. 10, the terminal device 2 may first obtain an image. The image 1001 herein may be an image shot by the user by using a camera of the terminal device 2 or an image selected from a local album of the terminal device 2. The image 1001 may be opened in the image application of the terminal device 2. In some embodiments, normalization processing in an RGB domain may be further performed on the image 1001 in the image application of the terminal device 2. The user may perform a frame drawing operation on the image 1001, and select a region of interest 1002 on the image 1001. The terminal device 2 receives the operation of the user. The image application based on a neural network model may perform salient segmentation on the region of interest 1002. To be specific, the image application may perform recognition processing on the region of interest 1002 on the image 1001 by using the neural network model that is trained and adjusted in advance, to obtain a salient target. In other words, a character 1003 is obtained from the region of interest 1002 through segmentation, and is saved as an image 1004. In some embodiments, because the neural network model of the image application can distinguish between the character 1003 and a background or a foreground in the region of interest 1002, the finally obtained image 1004 may include only the character 1003, and does not include the background or the foreground in the image 1001. The user may copy the image 1004 to a PPT or a Word document for presentation and application.

In some embodiments, the target neural network model may also be applied to an application that supports speech recognition or text recognition.

In FIG. 7, the first preset quantity K and the second preset quantity N that are used by the server to configure the neural network model are described. Values of K and N herein may be determined by performing an ablation experiment on the neural network model in a training process of the neural network model. The ablation experiment may be used to determine optimal results of the values of K and N. The value of K may be first fixed, and the value of N is adjusted to enable a performance parameter of the neural network model to be optimal, to obtain the optimal result of the value of N. Then, N is fixed based on the optimal result of the value of N, and the value of K is adjusted to enable the performance parameter of the neural network model to be optimal, to obtain the optimal result of the value of K. Table 1 shows a correspondence between the values of K and N that are determined by using the ablation experiment and the performance parameter of the neural network model according to an embodiment of this application. It can be learned that a model name may indicate a name of the neural network model. Herein, a "model 1" indicates a neural network model that is being trained by the server. Herein, the first preset quantity K and the second preset quantity N respectively indicate a quantity of branches formed by convolution units and normalized units of the neural network model that is being trained and a quantity of branches formed by distillation loss units of the neural network model that is being trained. The performance parameter may indicate precision of the neural network model. Refer to Table 1. In a process in which the server trains the neural network model, the values of K and N are continuously adjusted. When K=6 and N=4, the performance parameter of the neural network model is optimal.

Table 1

| Model name | First preset quantity K | Second preset quantity N | Performance parameter |
|---|---|---|---|
| Model 1 | 1 | 1 | 70.8 |
| Model 1 | 2 | 1 | 70.8 |
| Model 1 | 4 | 1 | 71.1 |
| Model 1 | 6 | 1 | 71.2 |
| Model 1 | 8 | 1 | 71.1 |
| Model 1 | 10 | 1 | 71.1 |
| Model 1 | 1 | 2 | 70.8 |
| Model 1 | 1 | 4 | 71.1 |
| Model 1 | 1 | 6 | 70.9 |
| Model 1 | 6 | 4 | 71.7 |

The values in Table 1 are all examples. In some embodiments, the values in Table 1 may alternatively be any other values. This is not limited in embodiments of this application.

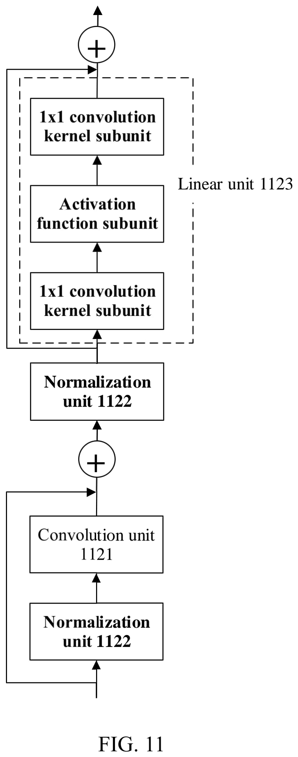

FIG. 11 is a diagram of a data processing layer in the neural network model 100 according to an embodiment of this application. In the embodiment shown in FIG. 11, the data processing layer may include a convolution unit 1121, a normalization unit 1122, and a linear unit 1123. The convolution unit 1121 is configured to perform feature extraction on input data, to obtain feature data (an eigenvector). The normalization unit 1122 herein may be referred to as batch normalization (Batch Normalization, BN) unit, and is configured to reduce a data offset between units (nodes) in the neural network model, so that an output of the neural network model is more stable.

An activation function subunit in the linear unit 1123, namely, a rectified linear unit (Rectified Linear Activation Function, ReLU), is configured to perform linear transformation on the feature data, for example, prune a negative part of the feature data to 0 and retain a positive part of the feature data.

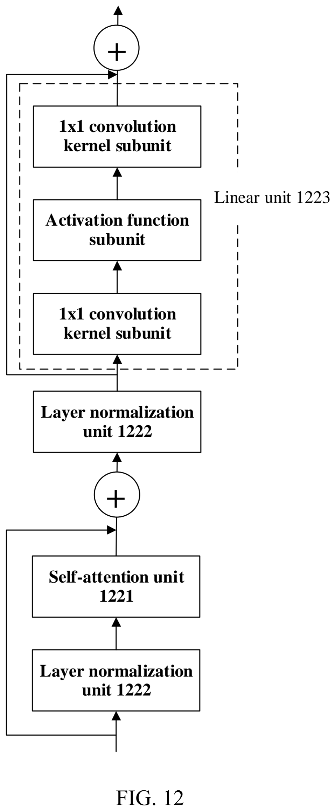

Compared with FIG. 11, FIG. 12 is a diagram of a data processing layer in the neural network model 100 according to an embodiment of this application. In the embodiment shown in FIG. 12, the data processing layer may include a self-attention unit 1221, a layer normalization unit 1222, and a linear unit 1223. The self-attention unit 1221 is a module configured to calculate feature data at each location in input data, is usually used in the language processing field, and can determine a relationship between words at different locations in an input statement. Compared with the convolution unit 1121, the self-attention unit 1221 has a larger quantity of parameters, and data processing is slower.

The layer normalization unit 1222 may be referred to as a layer normalization (Layer Normalization, LN), and may also be configured to reduce a data offset between units (nodes) in the neural network model, so that an output of the neural network model is more stable. However, a data processing speed of the layer normalization unit 1222 is slower than that of the batch normalization (Batch Normalization, BN) unit. An activation function subunit in the linear unit 1223 is a Gaussian error linear unit (Gaussian Linear Activation Function, GeLU). A data processing speed of the GeLU herein is also slower than that of the ReLU.

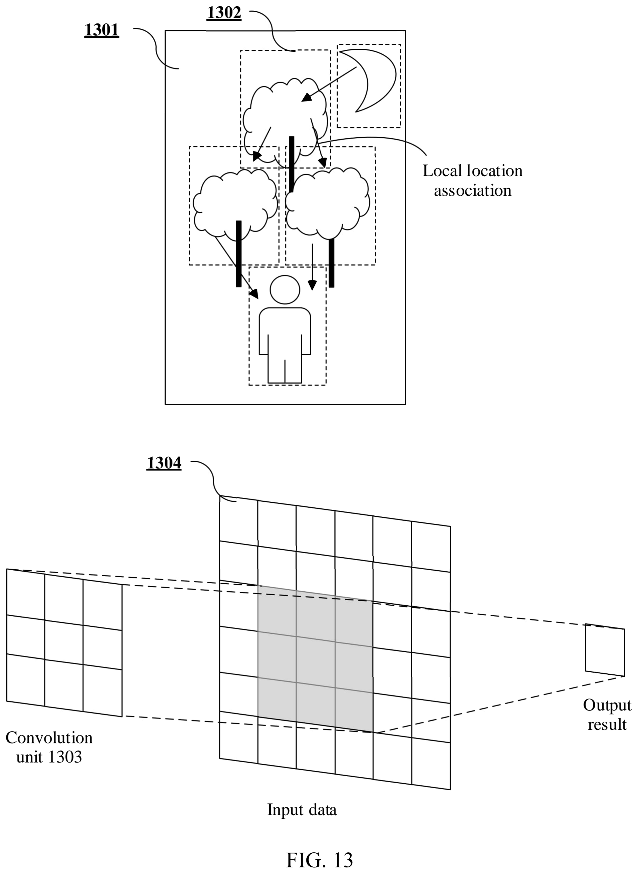

FIG. 13 is a diagram of a scenario of processing data by a convolution unit and a self-attention unit according to an embodiment of this application. In the embodiment shown in FIG. 13, the self-attention unit may be configured to: determine a local location relationship between objects included in an image 1301, and capture a local representation 1302 corresponding to a local location. The convolution unit 1303 is configured to directly capture the local representation from input data 1304, to obtain an output result.

Although this application is described with reference to example embodiments, this does not mean that features of this application are limited only to the implementations. On the contrary, a purpose of describing the present invention with reference to the implementations is to cover other selections or modifications that may be derived based on the claims of this application. To provide an in-depth understanding of this application, the following descriptions include a plurality of example details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

Furthermore, various operations will be described as a plurality of discrete operations in a manner that is most conducive to understanding illustrative embodiments. However, an order of description should not be construed as implying that these operations need to depend on the order. In particular, these operations do not need to be performed in the rendered order.

As used herein, a term "module" or "unit" may mean, be, or include: an application-specific integrated circuit (ASIC), an electronic circuit, a (shared, dedicated, or group) processor and/or a memory that executes one or more software or firmware programs, a composite logic circuit, and/or another proper component that provides the described functions.

In the accompanying drawings, some structure or method features may be shown in a particular arrangement and/or order. However, it should be understood that such a particular arrangement and/or order may not be required. In some embodiments, these features may be arranged in a manner and/or order different from that shown in the illustrative accompanying drawings. In addition, inclusion of the structure or method features in a particular figure does not imply that such features are required in all embodiments, and in some embodiments, these features may not be included or may be combined with other features.

Embodiments of a mechanism disclosed in this application may be implemented in hardware, software, firmware, or a combination of these implementation methods. Embodiments of this application may be implemented as a computer program or program code executed in a programmable system. The programmable system includes a plurality of processors, a storage system (including volatile and non-volatile memories and/or storage elements), a plurality of input devices, and a plurality of output devices.

Such a computer-readable storage medium may include but is not limited to non-transient tangible arrangements of articles manufactured or formed by machines or devices. The computer-readable storage medium includes a storage medium, for example, a hard disk or any other type of disk including a floppy disk, a compact disc, a compact disc read-only memory (CD-ROM), a compact disc rewritable (CD-RW), or a magneto-optical disc; a semiconductor device, for example, a read-only memory (ROM), a random access memory (RAM) like a dynamic random access memory (DRAM) or a static random access memory (SRAM), an erasable programmable read-only memory (EPROM), a flash memory, or an electrically erasable programmable read-only memory (EEPROM); a phase change memory (PCM); a magnetic card or an optical card; or any other type of proper medium for storing electronic instructions.

Therefore, embodiments of this application further include a non-transient computer-readable storage medium. The medium includes instructions or design data, for example, a hardware description language (HDL), and defines a structure, a circuit, an apparatus, a processor, and/or a system feature described in this application.

**Claims**

1. A neural network model processing method, comprising:

   obtaining, by a first electronic device, a to-be-processed first neural network model, wherein the first neural network model comprises M first processing units, the M first processing units are capable of performing parallel processing on data, and M is greater than or equal to 2;
   combining, by the first electronic device, the M first processing units of the first neural network into S second processing units, to obtain a second neural network, wherein S is less than M; and
   sending, by the first electronic device, the second neural network model to a second electronic device.

2. The method according to claim 1, wherein combining, by the first electronic device, the M first processing units of the first neural network into the S second processing units, to obtain the second neural network comprises:

obtaining first parameters of P first processing units in the M first processing units, wherein P is less than or equal to M; and

combining the first parameters of the P first processing units into a second parameter, and configuring the S second processing units by using the second parameter, wherein a value of S is 1.

3. The method according to claim 2, wherein the combining comprises at least one of summing, averaging, or weighted averaging of the first parameters.

4. The method according to claim 2, wherein the P first processing units comprise P data processing units, and the P data processing units are configured to perform feature processing on the data to obtain a prediction result; or
the P first processing units comprise P distillation loss units, and the loss unit is configured to determine a difference between a prediction result output by a data processing unit of the first neural network model and an actual result.

5. The method according to claim 1, wherein the first neural network model comprises a convolutional neural network model, and the data processing unit comprises a convolutional layer or a pooling layer.

6. The method according to claim 1, wherein the first electronic device comprises a server, and the second electronic device comprises a terminal device.

7. The method according to claim 6, wherein the terminal device comprises at least one of the following: a mobile phone, a tablet computer, and a smartwatch.

8. The method according to claim 1, wherein the first neural network model or the second neural network model is configured to implement at least one of the following functions: image recognition, text recognition, and speech recognition.

9. An electronic device for processing a neural network, comprising one or more processors and one or more memories, wherein the one or more memories store one or more programs, and when the one or more programs are executed by the one or more processors, the electronic device is enabled to perform the neural network model processing method according to any one of claims 9 to 11.

10. A computer-readable storage medium, wherein the storage medium stores instructions, and when the instructions are executed on a computer, the computer is enabled to perform the neural network model processing method according to any one of claims 1 to 11.

11. A computer program product, comprising a computer program/instructions, wherein when the computer program/instructions is/are executed by a processor, the neural network model processing method according to any one of claims 1 to 11 is implemented.

FIG. 1

**Server 3**

**Terminal device 2**

| Classification loss unit 1001 | Distillation loss unit 1002 |

Backbone network 101

100 Input data

**Adjusted neural network model**

Prediction result 1 ⊕ Prediction result 2

Backbone network 101a

100a Input data

FIG. 2

**Server 3**

**N**

Classification loss unit 1001b

Distillation loss unit 1002b

... Distillation loss unit 1002b

Backbone network 101b

**100b** Input data

Adjusted neural network model

**Terminal device 2**

Prediction result

Backbone network 101c

**100c** Input data

FIG. 3

FIG. 4

| Internal memory 510 | Power management module 520 | Communication module 530 |
|---|---|---|

| | Processor 500 | |
|---|---|---|

FIG. 5

Antenna 1

Antenna 2

| Mobile communication module 2G/3G/4G/5G [650] | Wireless communication module BT/WLAN/GNSS/NFC/IR/FM [660] |

| Speaker [670A] | | |
| Receiver [670B] | Audio module [670] | |
| Microphone [670C] | | |
| Headset jack [670D] | | |

Displays 1 to N [694]

Cameras 1 to N [693]

Indicator [692]

Motor [691]

Button [690]

Internal memory [621]

SIM card interfaces 1 to N [695]

External memory interface [620]

Processor [600]

Sensor module [680]

Pressure sensor [680A]

Gyroscope sensor [680B]

Barometric pressure sensor [680C]

Magnetic sensor [680D]

Acceleration sensor [680E]

Distance sensor [680F]

Optical proximity sensor [680G]

Fingerprint sensor [680H]

Temperature sensor [680J]

Touch sensor [680K]

Ambient light sensor [680L]

Bone conduction sensor [680M]

USB interface [630]

Charging input

Charging management module [640]

Power management module [641]

Battery [642]

FIG. 6

| A server 3 obtains input data | S701 |
| The server 3 configures, for a neural network model, multi-branch convolution units and multi-branch normalization units that correspond to a first preset quantity | S702 |
| The server 3 configures, for the neural network model, multi-branch distillation loss units corresponding to a second preset quantity | S703 |
| The server 3 trains the neural network model by using the input data | S704 |
| The server 3 adjusts the distillation loss units, the convolution units, and the normalization units of a trained neural network model to a single-branch target convolution unit and a single-branch target distillation loss unit, to obtain a target neural network model | S705 |
| The server 3 re-parameterizes parameters of the multi-branch convolution units and the multi-branch normalization units that correspond to the first preset quantity into a first fusion parameter | S706 |
| The server 3 re-parameterizes parameters of the multi-branch distillation loss units corresponding to the second preset quantity into a second fusion parameter | S707 |
| The server 3 configures the target convolution unit and the target distillation loss unit of the target neural network model by using the first fusion parameter and the second fusion parameter | S708 |
| The server 3 sends an adjusted target neural network model to an electronic device 2 | S709 |

FIG. 7

FIG. 8

FIG. 9

Obtain an image ⟹ Receive a frame drawn by a user for a region of interest in the image ⟹ Perform segmentation on a salient object in the frame ⟹ Obtain a segmentation result

FIG. 10

FIG. 11

FIG. 12

**1301**  **1302**

Local location
association

**1304**

Convolution
unit 1303

Output
result

Input data

FIG. 13

## INTERNATIONAL SEARCH REPORT

| International application No. |
|---|
| **PCT/CN2024/083321** |

| A. | CLASSIFICATION OF SUBJECT MATTER |
|---|---|

G06N 3/0464(2023.01)i;  G06N 3/08(2023.01)i

According to International Patent Classification (IPC) or to both national classification and IPC

| B. | FIELDS SEARCHED |
|---|---|

Minimum documentation searched (classification system followed by classification symbols)

IPC:  G06N

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 神经网络, 并行, 处理单元, 合并, 分支, 终端, 模型, neural network, parallel, processing unit, merge, branch, terminal, model

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116451742 A (HUAWEI TECHNOLOGIES CO., LTD.) 18 July 2023 (2023-07-18) claims 1-11, and description, paragraphs [0057]-[0147] | 1-11 |
| X | CN 108304921 A (BEIJING SENSETIME SCIENCE TECHNOLOGY DEVELOPMENT CO., LTD.) 20 July 2018 (2018-07-20) description, paragraphs [0081]-[0160] | 1-11 |
| A | CN 114492754 A (SHANGHAI SENSETIME LINGANG INTELLIGENT TECHNOLOGY CO., LTD.) 13 May 2022 (2022-05-13) entire document | 1-11 |
| A | CN 110298437 A (GUANGDONG OPPO MOBILE COMMUNICATIONS CO., LTD.) 01 October 2019 (2019-10-01) entire document | 1-11 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2024** | **29 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2024/083321**

| Patent document cited in search report | | | Publication date (day/month/year) | Patent family member(s) | | | Publication date (day/month/year) |
|---|---|---|---|---|---|---|---|
| CN | 116451742 | A | 18 July 2023 | None | | | |
| CN | 108304921 | A | 20 July 2018 | CN | 108304921 | B | 02 February 2021 |
| CN | 114492754 | A | 13 May 2022 | None | | | |
| CN | 110298437 | A | 01 October 2019 | CN | 110298437 | B | 01 June 2021 |

Form PCT/ISA/210 (patent family annex) (July 2022)

**REFERENCES CITED IN THE DESCRIPTION**

**Patent documents cited in the description**

- CN 202310332748